(19) Europäisches Patentamt
European Patent Office
Office européen des brevets

(11) **EP 0 941 976 B1**

(12) **EUROPEAN PATENT SPECIFICATION**

(45) Date of publication and mention
of the grant of the patent:
**14.05.2003 Bulletin 2003/20**

(51) Int Cl.$^7$: **C04B 35/594**

(21) Application number: **99301804.3**

(22) Date of filing: **10.03.1999**

(54) **Highly heat-conductive silicon nitride-base sintered-body and method for fabricating the same**

Sinterkörper hoher Wärmeleitfähigkeit auf Siliciumnitridbasis und Verfahren zur Herstellung desselben

Corps fritté à base de nitrure de silicium ayant une conductibilité thermique élevée et son procédé de fabrication

| | |
|---|---|
| (84) Designated Contracting States: **DE FR GB** | (74) Representative: **Cross, Rupert Edward Blount et al BOULT WADE TENNANT, Verulam Gardens 70 Gray's Inn Road London WC1X 8BT (GB)** |
| (30) Priority: **12.03.1998 JP 6073398** **19.01.1999 JP 1024199** | |
| (43) Date of publication of application: **15.09.1999 Bulletin 1999/37** | (56) References cited: **EP-A- 0 587 119** **US-A- 4 235 857** |
| (73) Proprietor: **Sumitomo Electric Industries, Ltd. Osaka-shi, Osaka 541-0041 (JP)** | • **N. HIROSAKI ET AL.: "Effect of grain growth on the thermal conductivity of silicon nitride" JOURNAL OF THE CERAMIC SOCIETY OF JAPAN, INT. EDITION, vol. 104, - 1996 pages 50-54, XP002105543** |
| (72) Inventors: • **Itoh, Ai, Itami Works of Sumitomo Elec. Ind., Ltd Itami-shi, Hyogo (JP)** • **Miyanaga, Michimasa, Itami Works of Sumitomo Elec. Itami-shi, Hyogo (JP)** | • **PATENT ABSTRACTS OF JAPAN vol. 097, no. 006, 30 June 1997 & JP 09 030866 A (NISSAN MOTOR CO. LTD.), 4 February 1997** • **PATENT ABSTRACTS OF JAPAN vol. 098, no. 002, 30 January 1998 & JP 09 268069 A (KYOCERA CORP.), 14 October 1997** |

**Description**

The invention relates to a mechanically strong, highly heat-dissipative silicon nitride ($Si_3N_4$)-base sintered-body (sintered body mainly consisting of silicon nitride) suitable for not only insulation substrates and heat-dissipating plates of semiconductor devices but also structural members of automobiles, machines, and OA equipment. It also relates to a method for fabricating the sintered body.

Ceramics mainly consisting of silicon nitride are superior to other ceramic materials in terms of heat resistance, mechanical strength, and toughness, and are suitable for structural members of automobiles, machines, and OA equipment. In exploiting their superior insulation property, application to insulating, heat-dissipating substrates of semiconductor devices has also been tried.

Superior in thermal conductivity, AlN and SiC have been used for ceramic substrates for semiconductor devices. However, conventional, highly heat-conductive materials such as AlN or SiC are insufficient in terms of mechanical strength and toughness, imposing limitations on handling, operating environments, and shapes of the products.

The circumstances, therefore, require the development of ceramic materials having not only high strength for withstanding external force but also high heat-dissipating power. To enhance the performance of products, the heat-dissipating properties of structural members, to which resistance to thermal shock is essential, as well as the mechanical strength of the sliding members must be improved.

Because $Si_3N_4$ innately has high mechanical strength, a wide range of its applications from structural members to heat-dissipative insulation substrates can be expected if its thermal conductivity is further increased. However, due to its comparatively low thermal conductivity, the conventional $Si_3N_4$-base sintered body is minimally applied to heat-dissipative insulation substrates and other uses.

Al is known to reduce the thermal conductivity of $Si_3N_4$. When $Al_2O_3$ is added as a sintering agent, for example, Al dissolves in $Si_3N_4$ grains, becoming a factor that scatters phonons and reduces thermal conductivity. In order to eliminate this drawback, a sintering process has been developed, which does not use a sintering agent that dissolves in $Si_3N_4$ grains. Findings reveal that the addition of only $Y_2O_3$ as a sintering agent produces a dense $Si_3N_4$-base sintered body with thermal conductivity of 70 W/mK. (See J. Ceram. Soc. J. vol. 97 (1) pp. 56-62, 1989.)

Another factor that reduces the thermal conductivity of $Si_3N_4$ is the existence of the grain boundary phases composed of glass phases having low thermal conductivity. To counteract this effect, unexamined Japanese patent application Tokukaihei 7-149588 discloses a process that controls the cooling rate after sintering to slower than 100 °C/hr so that some of grain-boundary phases are crystallized, resulting in thermal conductivity higher than 60 W/mK.

It is also known that when β-silicon nitride is used as material powders to be sintered at a high temperature of 2000 °C under a high pressure of 300 atm, the grain size becomes coarse, decreasing the effect of the grain-boundary phase on the thermal conductivity to produce a highly heat-conductive silicon nitride-base sintered body. (See J. Ceram. Soc. J. vol. 104 (1) pp. 49-.)

As mentioned above, the dissolution of Al when used as a sintering agent in grains and the thermal conductivity of grain-boundary phases are studied to increase the thermal conductivity of an $Si_3N_4$-base sintered body. However, this approach alone does not fulfill the object. A constituent including Al must inevitably be added to obtain a dense $Si_3N_4$ body with sufficiently high mechanical strength, and this reduces the thermal conductivity. To prevent this reduction and further increase the thermal conductivity, it is necessary to employ high temperature and high pressure at the cost of reduced productivity.

The object of the invention, in consideration of the above-mentioned circumstances, is to offer a highly heat-conductive, mechanically strong $Si_3N_4$-base sintered body that can be produced with high productivity.

To achieve the above object, the present inventors studied factors that affect the thermal conductivity of an $Si_3N_4$-base sintered body, and found that further increased thermal conductivity is possible by improving the crystallinity of $Si_3N_4$ grains, in addition to the conventionally considered factors such as the thermal conductivity of grain-boundary phases and the grain size of $Si_3N_4$.

More specifically, it was found that the crystallinity of $Si_3N_4$ grains is substantially improved by the selection of a proper sintering agent and the conditions of the nitriding reaction, such as temperature and atmosphere, in the reaction-sintering method that uses Si powders as the starting material.

Accordingly, the present invention provides a highly heat-conductive silicon nitride ($Si_3N_4$)- base sintered body, wherein half widths of X-ray diffraction peaks on the (500) and (330) planes of the $Si_3N_4$ are 0.2° or less, and wherein the sintered body has a thermal conductivity of 80 W/mK or more and a three-point bending strength of 800 MPa or more. In addition, it is desirable that the measured results of the X-ray diffraction peaks on $Si_3N_4$ satisfy the following formula:

$$(W_5 - W_2)/(\tan\theta_5 - \tan\theta_2) \leqq 0.001,$$

where $W_2$: half width of the diffraction peak on the (200) at a measured angle $\theta = \theta_2$,

$W_5$: half width of the diffraction peak on the (500) at a measured angle $\theta = \theta_5$.

The above-described silicon nitride-base sintered body comprises the crystal phases of $\beta$-$Si_3N_4$ grains and grain boundary phases, which preferably contain a 1 to 20 wt.% compound, in oxide equivalent, of at least one kind of rare-earth element selected from the group consisting of Sm, Yb, Y, Er, and Gd. The grain boundary phases having the foregoing preferable composition may further contain a 0.1 to 10 wt.% element, in oxide equivalent, of at least one kind selected from the group consisting of Mg, Ca, and Ti.

To obtain an $Si_3N_4$-base sintered body having satisfactory crystallinity as mentioned above, annealing in a high-temperature, high-pressure atmosphere or gas-phase synthesis may be conceived. However, for achieving low-cost production and high mechanical strength (reduction in grain size), it is desirable that the starting material of such a fabricating method be low cost and highly pure, and the sintering process be controlled so that $Si_3N_4$ grains may not contain impurities and defects. To meet these requirements, the invention employs the following fabricating method:

According to the method for fabricating the silicon nitride-base sintered body of the invention, Si powders containing 0.1 wt.% or less Al are mixed with a sintering agent representing 1 to 20 wt.% of the Si powders in $Si_3N_4$ equivalent to form a compact. The compact is then heated at a rate of 0.2 to 0.6 °C/min in the range of 1220 to 1320 °C in a nitrogen atmosphere containing 5 % or less He to be nitrided at 1220 to 1400 °C before sintering between 1650 and 1950 °C in a nitrogen atmosphere.

In the method according to the present invention a sintering agent is used that comprises oxide powders of at least one kind of rare-earth element selected from the group consisting of Sm, Yb, Y, Er, Gd, Eu, Tb and Tm. These sintering agents form few solid solutions with $Si_3N_4$ grains, give no uneven distortion to the crystal, and expedite the nitriding reaction of Si.

According to the method for fabricating the silicon nitride-base sintered body, the above-mentioned mixture of Si powders and rare-earth elements' oxide powders may further be mixed with other oxide powders, representing 0.1 to 10 wt.% of the foregoing Si powders in $Si_3N_4$ equivalent, of at least one kind of element selected from the group consisting of Mg, Ca, and Ti. It is also desirable that the sintered body be cooled at a rate of 100 °C/hr or more in the range of the sintering temperature to 1600 °C and at a rate of 100 °C/hr or less in the range of 1600 to 1500 °C.

As explained above, the present invention offers a highly heat-conductive, mechanically strong $Si_3N_4$-base sintered body having improved crystallinity of $Si_3N_4$ grains by the use of the silicon-powder reaction-sintering method, which is superior in productivity.

According to the invention, which employs the reaction-sintering method that uses Si powders as the starting material, Si powders are available at a lower cost and purer quality than $Si_3N_4$ powders, impurities such as Al included in the material can be reduced, and $Si_3N_4$-base sintered bodies can be fabricated with low-cost processes without relying on high temperature and high pressure.

In the invention, attention was focused on the hitherto neglected distortion in $Si_3N_4$ grains due to defects resulting from the nitriding reaction and sintering process. Reduction of this distortion was achieved in the method according to the present invention through the selection of sintering agents comprising oxides of Sm, Yb, Y, Er, and/or Gd as mentioned above, and through the optimization of temperature and atmosphere for the nitriding reaction.

This approach enabled the embodiment of an $Si_3N_4$-base sintered body that has substantially high thermal conductivity in comparison with the conventional method without losing the intrinsic mechanical strength of $Si_3N_4$. It also enabled sintering at low temperature and low pressure compared to conventional methods without depending on sintering agents such as $Al_2O_3$ that reduce thermal conductivity, so that a dense $Si_3N_4$-base .sintemd'body can be produced easily.

More specifically, in the method for fabricating the silicon nitride-base sintered body of the invention, Si powders containing a 0.1 wt.% or less impurity Al are used as the principal material powders. Because Al in Si powders significantly affects the thermal conductivity of a sintered body as minute impurities in grains, it is necessary to reduce the Al content of Si powders to 0.1 wt.% or less in order to achieve sufficiently high thermal conductivity. The use of such Si powders suppresses the dissolution of Al into $Si_3N_4$ grains in comparison with the ordinary $Si_3N_4$ powders, which usually contain 0.1 to 1 wt.% Al in the form of a solid solution, and facilitates the production of highly purified $Si_3N_4$ grains.

In the method according to the present invention, a sintering agent is used that comprises oxide powders of at least one kind of rare-earth element selected from the group consisting of Sm, Yb, Y, Er, Gd, Eu, Tb and Tm. The use of sintering agents having such desirable composition enables easy fabrication of highly crystallized $Si_3N_4$ grains through nitriding and sintering processes. Sintering agents of 3A-group elements other than those designated above tend to develop defects in $Si_3N_4$ grains, to cause uneven distortion in the crystal, or to allow the added elements themselves to dissolve into the grains during the process of nitriding and sintering, making it difficult to produce $Si_3N_4$ with satisfactory crystallinity. This leads to the difficulty of the embodiment of a highly heat-conductive $Si_3N_4$-base sintered body. In addition to this, the nitriding reaction of Si cannot be performed sufficiently, developing coarse molten blocks of Si, so that adequate mechanical strength may not be obtained.

The added amount of a sintering agent should be in the range of 1 to 20 wt.% of the Si powders, the principal material powders, in $Si_3N_4$ equivalent. If less than 1 wt.%, the nitriding reaction cannot be performed sufficiently, developing coarse molten blocks of Si, so that the mechanical strength of the sintered body decreases considerably. If more than 20 wt.%, the grain-boundary phases develop excessively, decreasing not only the mechanical strength and toughness but also the thermal conductivity of the sintered body.

In addition to the above sintering agents, an additional additive may be added, which comprises oxide powders, representing 0.1 to 10 wt.% of Si powders in $Si_3N_4$ equivalent, of at least one kind of element selected from the group consisting of Mg, Ca, and Ti. These oxides promote sintering without reducing thermal conductivity, enabling the production of high-strength sintered bodies at comparatively low temperature and low pressure. For instance, sintering is possible at 1750 °C or below in a nitrogen atmosphere under atmospheric pressure without relying on a process with high-pressure gas such as hot-isostatic pressing (HIP).

The foregoing material powders of Si, a sintering agent, and an additional additive are mixed by a ball mill or other well-known means to form a compact having a given shape. As for the forming method, the die-pressing method, sheet-forming method, and other prevalent methods are applicable.

The compact is nitrided at 1220 to 1400 °C in a nitrogen atmosphere containing 5 % or less He. If lower than 1220 °C, the nitriding reaction cannot be performed sufficiently. If higher than 1400 °C, the reaction heat melts Si, developing defects, so that the sintered body cannot have sufficient mechanical strength. The He gas, 5 % or less in the nitrogen atmosphere, facilitates homogeneous reaction of nitriding, suppressing the distortion in grains and the generation of large pores, so that the sintered body can be improved in thermal conductivity and mechanical strength.

In the above nitriding process, it is essential that the compact be heated at a rate of 0.2 to 0.6 °C/min in the range of 1220 to 1320 °C, the temperature range where the nitriding reaction proceeds rapidly, entailing the possible formation of defects, and hence requires sufficient control of the reaction rate. If the temperature-rising rate is less than 0.2 °C/min, the prolonged reaction time not only reduces productivity but also may decrease crystallinity. If more than 0.6 °C/min, the $Si_3N_4$ grain remarkably decreases in crystallinity, resulting in reduced thermal conductivity of the sintered body.

The nitrided compact is then sintered between 1650 and 1950 °C in a nitrogen atmosphere. If the sintering temperature is lower than 1650 °C, the sintered body increases in porosity, reducing thermal conductivity and mechanical strength. If higher than 1950 °C, $Si_3N_4$ decomposes easily, so that a high-pressure process is required, reducing the productivity undesirably. It is desirable that the sintering be executed to the extent that the completed $Si_3N_4$-base sintered body has a relative density (ratio of a measured density to the theoretical density) of 95 % or more.

As explained above, the fabricating method of the invention characteristically performs (1) the proper selection of the sintering agent that expedites the nitriding reaction without impairing the crystallinity of forming $Si_3N_4$ grains, (2) the inclusion of a small amount of He in the nitrogen atmosphere when the compact is heated and nitrided, and (3) the slow-rate heating in the temperature range where nitriding reaction proceeds rapidly.

In addition, the present inventors' findings on the effect of the cooling rate from the sintering temperature on the crystallinity of $Si_3N_4$ grains demonstrated that simple slow-rate cooling produces local distortion in the $Si_3N_4$ grains, differing from the common knowledge that considerably slow cooling promotes crystallization of grain-boundary phases and favorably increases thermal conductivity.

Based on the above study, in the fabricating method of the invention, the most desirable cooling process after the sintering is specified as follows: The sintered body is to be cooled at a rate of 100 °C/hr or more from the sintering temperature to 1600 °C, at which temperature the crystallization of grain-boundary phases is completed, and at a slower rate of 100 °C/hr or less from 1600 to 1500 °C. This cooling procedure further promotes the crystallization of grain-boundary phases, increases the crystallinity of $Si_3N_4$ grains, and therefore provides the highest thermal conductivity.

Thus, the fabricating method of the invention, as compared to the conventional means, enables the dense sintering at low temperature and low pressure, is superior in productivity, and produces an $Si_3N_4$-base sintered body with high mechanical strength and substantially high thermal conductivity. Specifically, the $Si_3N_4$-base sintered body has a relative density of 95 % or more, thermal conductivity of 80 W/mK or more, and three-point bending strength of 800 MPa or more.

In other words, the $Si_3N_4$-base sintered body of the invention is superior in crystallinity to the conventional sintered body in that the half widths of X-ray diffraction peaks on the (500) and (330) of $Si_3N_4$ are 0.2 ° or less. In addition, as an index for estimating the rate of variation in the spacing of lattice planes by means of the X-ray diffraction peak of $Si_3N_4$, it is desirable that $\Delta d/d = (W_5 - W_2)/(\tan \theta_5 - \tan \theta_2)$ be 0.001 or less, where d is the spacing of lattice planes, $\Delta d$ is the variation of the spacing of lattice planes, $W_2$ is the half width of the diffraction peak on the (200) at a measured angle $\theta = \theta_2$, and $W_5$ on the (500) at $\theta = \theta_5$. Incidentally, the conventional $Si_3N_4$-base sintered body usually has a half width of more than 0.2 ° and a $\Delta d/d$ of 0.003 or more.

It is preferable that the $Si_3N_4$-base sintered body of the invention be composed of the crystal phases made of β-silicon nitride grains and the grain-boundary phases containing a 1 to 20 wt.% compound, in oxide equivalent, of at least one kind of rare-earth element selected from the group consisting of Sm, Yb, Y, Er, and Gd. Yet, in the foregoing preferable composition, the grain-boundary phases may further contain a 0.1 to 10 wt.% element, in oxide equivalent, of at least one kind selected from the group consisting of Mg, Ca, and Ti. It is also desirable that the foregoing $\beta$-$Si_3N_4$ grains have an average size of 0.5 to 20 µm.

EXAMPLE 1

Si powders having an average grain size of 1 µm and containing 0.05 wt.% Al were mixed with a sintering agent composed of oxide powders of rare-earth elements, the kind and added amount of which are shown in Table 1 below. In the table, the added amount is shown by the weight ratio to the Si powders in $Si_3N_4$ equivalent; the same is applied to the following tables. The mixing was carried out in an alcohol solvent by means of a ball mill having an $Si_3N_4$-lined pot and $Si_3N_4$ balls to produce slurry. The slurry was dried with a spray drier to form granules about 120 µm in average diameter.

The granules were dry-compacted to form samples for the three-point bending test (45 mm in length, 8 mm in width, and 5 mm in thickness) and samples for thermal conductivity measurement (12.5 mm in diameter and 5 mm in thickness). These compacts were placed in a BN-lined carbon refractory case to be nitrided in an $N_2$ gas atmosphere containing 3 % He (gas-pressure ratio: $N_2$:He = 0.97:0.03, gas pressure: 3 atm). For nitriding the compacts, the temperature was raised at a rate of 0.3 °C/min in the range of 1220 to 1320 °C and kept at 1400 °C for one hour. Subsequently, the nitrided compacts were sintered at 1800 °C for three hours in an $N_2$ gas atmosphere at 3 atm.

Of the completed $Si_3N_4$-base sintered bodies, samples for the three-point bending test were used to measure a relative density and three-point bending strength, and samples for thermal conductivity were used to measure thermal conductivity by the laser flash method. The crystallinity of $Si_3N_4$ grains was measured by the X-ray diffraction method using Cu-K $\alpha$-rays at a scanning rate of 1 ° /min, excitation potential of 50 kV, excitation current of 200 mA, and step width of 0.01° . These results are shown in Table 1 below, in which $\Delta$ d/d means $(W_5 - W_2)/(\tan\theta_5 - \tan\theta_2)$, where $W_2$ is the half width of the diffraction peak on the (200) at a measured angle $\theta = \theta_2$, and $W_5$ on the (500) at $\theta = \theta_5$.

Table 1

| Sample | Sintering agent | | Half width (° ) | | $\Delta$d/d | Thermal conductivity | Bending strength |
|---|---|---|---|---|---|---|---|
| | Kind | wt.% | (500) | (330) | | W/mK | MPa |
| 1 | $Sm_2O_3$ | 10 | 0.08 | 0.1 | 0.000 | 140 | 1000 |
| 2 | $Yb_2O_3$ | 10 | 0.05 | 0.08 | 0.000 | 150 | 1000 |
| 3 | $Gd_2O_3$ | 10 | 0.12 | 0.14 | 0.001 | 120 | 800 |
| 4 | $Y_2O_3$ | 10 | 0.16 | 0.20 | 0.001 | 90 | 800 |
| 5 | $Er_2O_3$ | 10 | 0.12 | 0.14 | 0.001 | 120 | 800 |
| 6 | $Dy_2O_3$ | 10 | 0.12 | 0.14 | 0.001 | 80 | 600 |
| 7* | $Pr_6O_{11}$ | 10 | 0.25 | 0.25 | 0.002 | 65 | 600 |
| 8* | $Ce_2O_3$ | 10 | 0.3 | 0.3 | 0.002 | 60 | 600 |
| 9* | $La_2O_3$ | 10 | 0.3 | 0.35 | 0.003 | 50 | 700 |
| 10* | $Sm_2O_3$ | 0.5 | 0.21 | 0.23 | 0.002 | 60 | 600 |
| 11 | $Sm_2O_3$ | 1 | 0.14 | 0.14 | 0.001 | 80 | 800 |
| 12 | $Sm_2O_3$ | 12 | 0.08 | 0.1 | 0.000 | 140 | 1000 |
| 13 | $Sm_2O_3$ | 20 | 0.12 | 0.14 | 0.001 | 80 | 900 |
| 14* | $Sm_2O_3$ | 21 | 0.19 | 0.21 | 0.001 | 70 | 800 |

* Comparative example

EXAMPLE 2

$Si_3N_4$-base sintered bodies were fabricated by the same means as Example 1 using the same Si powders except that 10 wt.% $Sm_2O_3$ powders were added as a sintering agent, and that the temperature-rising rate in the range of 1220 to 1320 °C at the time of nitriding was varied as shown in Table 2 below. Measurements were carried out on

the completed $Si_3N_4$-base sintered bodies on the same items as Example 1 to obtain the results shown in Table 2.

Table 2

| Sample | Temperature-rising rate in sintering | Half width (°) | | Δd/d | Thermal conductivity | Bending strength |
|---|---|---|---|---|---|---|
| | °C/min | (500) | (330) | | W/mK | MPa |
| 15* | 0.1 | 0.2 | 0.25 | 0.0014 | 50 | 800 |
| 16 | 0.2 | 0.1 | 0.12 | 0.0008 | 100 | 1000 |
| 17 | 0.5 | 0.08 | 0.1 | 0.0008 | 140 | 1000 |
| 18 | 0.6 | 0.12 | 0.14 | 0.001 | 90 | 800 |
| 19* | 0.7 | 0.25 | 0.35 | 0.0025 | 50 | 650 |

*: Comparative example

EXAMPLE 3

$Si_3N_4$-base sintered bodies were fabricated by the same means as Example 1 using the same Si powders except that 10 wt.% $Yb_2O_3$ powders were added as a sintering agent, that the temperature was raised at a rate of 0.2 °C/min in the range of 1220 to 1320 °C at the time of nitriding, and that the gas-pressure ratio of $N_2$ to He in the atmosphere for nitriding was varied as shown in Table 3 below. Measurements were carried out on the completed $Si_3N_4$-base sintered bodies on the same items as Example 1 to obtain the results shown in Table 3.

Table 3

| Sample | Gas-pressure ratio in nitriding | | Half width (°) | | Δd/d | Thermal conductivity | Bending strength |
|---|---|---|---|---|---|---|---|
| | $N_2$ | He | (500) | (330) | | W/mK | MPa |
| 20* | 1 | 0 | 0.19 | 0.21 | 0.001 | 75 | 900 |
| 21 | 0.95 | 0.05 | 0.05 | 0.08 | 0.000 | 150 | 1000 |
| 22* | 0.9 | 0.1 | 0.2 | 0.25 | 0.002 | 70 | 800 |

* Comparative example

EXAMPLE 4

$Si_3N_4$-base sintered bodies were fabricated by the same means as Example 1 except that Si powders having a varied Al content as shown in Table 4 below were mixed with 10 wt.% $Sm_2O_3$ powders as a sintering agent, and that the temperature was raised at a rate of 0.2 °C/min in the range of 1220 to 1320 °C at the time of nitriding. Measurements were carried out on the completed $Si_3N_4$-base sintered bodies on the same items as Example 1 to obtain the results shown in Table 4.

Table 4

| Sample | Al content in Si powders | Half width (°) | | Δd/d | Thermal conductivity | Bending strength |
|---|---|---|---|---|---|---|
| | wt.% | (500) | (330) | | W/mK | MPa |
| 23 | 0.01 | 0.08 | 0.1 | 0.00 | 130 | 1000 |
| 24 | 0.1 | 0.08 | 0.1 | 0.00 | 130 | 1000 |
| 25* | 0.15 | 0.21 | 0.25 | 0.00 | 60 | 1000 |

* Comparative example

EXAMPLE 5

$Si_3N_4$-base sintered bodies were fabricated by the same means as Example 1 using the same Si powders except that 10 wt.% $Yb_2O_3$ powders were added as a sintering agent, that MgO powders were added as an additional additive with the amount shown in Table 5 below, and that the sintering was performed at 1700 °C. In Table 5, the added amount of the additional additive is shown by the weight ratio to the Si powders in $Si_3N_4$ equivalent; the same is applied to the following tables. Measurements were carried out on the completed $Si_3N_4$-base sintered bodies on the same items as Example 1 to obtain the results shown in Table 5.

Table 5

| Sample | Additional additive | | Half width (°) | | $\Delta d/d$ | Thermal conductivity | Bending strength |
|---|---|---|---|---|---|---|---|
| | Kind | Wt.% | (500) | (330) | | W/mK | MPa |
| 26 | MgO | 0.05 | 0.1 | 0.12 | 0.001 | 80 | 800 |
| 27 | MgO | 1 | 0.05 | 0.08 | 0.001 | 130 | 1000 |
| 28 | MgO | 5 | 0.05 | 0.08 | 0.001 | 150 | 1100 |
| 29 | MgO | 10 | 0.1 | 0.12 | 0.001 | 130 | 900 |
| 30 | MgO | 11 | 0.12 | 0.14 | 0.001 | 80 | 850 |

EXAMPLES

$Si_3N_4$-base sintered bodies were fabricated by the same means as Example 1 using the same Si powders except that a 10 wt.% sintering agent and a 5 wt.% additional powder additive each of which are shown in Table 6 below were added, and that the sintering temperature was varied as shown in Table 6. Measurements were carried out on the completed $Si_3N_4$-base sintered bodies on the same items as Example 1 to obtain the results shown in Table 6.

Table 6

| Sample | Sintering agent | Additional additive | Sintering temperature | Half width (°) | | $\Delta d/d$ | Thermal conductivity | Bending strength |
|---|---|---|---|---|---|---|---|---|
| | | | °C | (500) | (330) | | W/mK | MPa |
| 31* | $Er_2O_3$ | CaO | 1600 | 0.19 | 0.21 | 0.0012 | 60 | 600 |
| 32 | $Er_2O_3$ | CaO | 1650 | 0.12 | 0.14 | 0.001 | 120 | 800 |
| 33 | $Yb_2O_3$ | MgO+CaO | 1750 | 0.06 | 0.05 | 0.0005 | 150 | 1200 |
| 34 | $Er_2O_3$ | CaO | 1800 | 0.12 | 0.14 | 0.001 | 120 | 1000 |
| 35 | $Er_2O_3$ | CaO | 1900 | 0.12 | 0.14 | 0.001 | 120 | 800 |
| 36* | $Er_2O_3$ | CaO | 1960 | 0.12 | 0.14 | 0.001 | 90 | 600 |

*: Comparative example

EXAMPLE 7

$Si_3N_4$-base sintered bodies were fabricated by the same means as Example 1 using the same Si powders except that a 10 wt.% sintering agent composed of $Sm_2O_3$ powders was added, that a 5 wt.% additional additive composed of MgO and CaO powders was added, and that the cooling rate after sintering (from the sintering temperature to 1600 °C and from 1600 to 1500°C) was varied as shown in Table 7 below. Measurements were carried out on the completed $Si_3N_4$-base sintered bodies on the same items as Example 1 to obtain the results shown in Table 7.

Table 7

| Sample | Cooling rate after sintering (°C/hr) | | Half width (°) | | $\Delta d/d$ | Thermal conductivity | Bending strength |
|---|---|---|---|---|---|---|---|
| | ~1600°C | 1600~ 1500°C | (500) | (330) | | W/mK | MPa |
| 37 | 50 | 100 | 0.1 | 0.12 | 0.001 | 130 | 1200 |
| 38 | 150 | 50 | 0.08 | 0.08 | 0.001 | 160 | 1200 |
| 39 | 300 | 300 | 0.12 | 0.14 | 0.001 | 120 | 1200 |

**Claims**

1. A highly heat-conductive silicon nitride ($Si_3N_4$)-base sintered body, wherein half widths of X-ray diffraction peaks on the (500) and (330) planes of the $Si_3N_4$ are 0.2° or less, and wherein the sintered body has a thermal conductivity of 80 W/mK or more and a three-point bending strength of 800 MPa or more.

2. A silicon nitride-base sintered body as claimed in claim 1, wherein the measured results of the X-ray diffraction peaks on $Si_3N_4$ satisfy the following formula:

$$(W_5-W_2)/(\tan\theta_5 - \tan\theta_2) \leq 0.001$$

   where $W_2$ is half the width of the diffraction peak on the (200) plane at a measured angle $\theta = \theta_2$, and $W_5$ is the half width of the diffraction peak on the (500) plane at a measured angle $\theta = \theta_5$.

3. A silicon nitride-base sintered body as claimed in claim 1 or claim 2, the sintered body comprising:

   a crystal phase comprising β-silicon nitride grains; and
   a grain-boundary phase comprising from 1 to 20 wt.% of a compound, in oxide equivalent, of at least one kind of rare-earth element selected from Sm, Yb, Y, Er, and Gd.

4. A silicon nitride-base sintered body as claimed in claim 3, wherein the grain-boundary phase further comprises from 0.1 to 10 wt.% of an element, in oxide equivalent, of at least one kind selected from Mg, Ca and Ti.

5. A silicon nitride-base sintered body as claimed in any one of claim 1 to 4, wherein the sintered body has a relative density of 95% or more, and the $Si_3N_4$ grains have an average size of from 0.5 to 20 $\mu$m.

6. A method for fabricating a highly heat-conductive silicon nitride-base sintered body as defined in claim 1, the method comprising:

   mixing Si powders containing 0.1 wt.% or less Al with a sintering agent representing from 1 to 20 wt.% of the Si powders in $Si_3N_4$ equivalent to form a compact, wherein oxide powders of at least one kind of rare-earth element selected from Sm, Yb, Y, Er, Gd, Eu, Tb and Tm are used as the sintering agent;
   heating the compact at a rate of from 0.2 to 0.6°C/min at a temperature in the range of from 1220 to 1320°C in a nitrogen atmosphere containing 5% or less of He;
   nitriding the compact at a temperature in the range of from 1220 to 1400°C; and
   sintering the nitrided compact at a temperature in the range of from 1650 to 1950°C in a nitrogen atmosphere.

7. A method as claimed in claim 6, wherein oxide powders, representing from 0.1 to 10 wt.% of the Si powders in $Si_3N_4$ equivalent, of at least one kind of element selected from Mg, Ca and Ti are further mixed with the Si powders and the sintering agent.

8. A method as claimed in claim 7, wherein sintering of the nitrided compact is carried out at a temperature in the range of from 1650 to 1750°C in a nitrogen atmosphere at atmospheric pressure.

9. A method as claimed in any one of claims 6 to 8, wherein the sintered body is cooled at a rate of 100°C/hr or more in the range of the sintering temperature to 1600°C and at a rate of 100°C/hr or less in the range of from 1600 to 1500°C.

**Patentansprüche**

1. Sehr wärmeleitfähiger Sinterkörper auf Siliziumnitridbasis ($Si_3N_4$), worin die Halbwertsbreite der Röntgenbeugungspeaks der (500) und (330) Ebenen des $Si_3N_4$ 0,2° oder weniger sind und worin der Sinterkörper eine thermische Leitfähigkeit von 80 W/mK oder mehr und eine Dreipunktbiegefestigkeit von 800 MPa oder mehr hat.

2. Sinterkörper auf Siliziumnitridbasis nach Anspruch 1, worin die gemessenen Ergebnisse der Röntgenbeugungspeaks von $Si_3N_4$ die folgende Formel erfüllen:

$$(W_5 - W_2)/(\tan\theta_5 - \tan\theta_2) \leq 0{,}001$$

worin $W_2$ die halbe Breite des Beugungspeaks auf der (200) Ebene bei einem Messwinkel $\theta = \theta_2$ ist und $W_5$ die halbe Breite des Beugungspeaks der (500) Ebene beim Messwinkel $\theta = \theta_5$ ist.

3. Sinterkörper auf Siliziumnitridbasis nach Anspruch 1 oder 2, wobei der Sinterkörper umfasst:

   eine Kristallphase mit β-Siliziumnitridkörnern; und

   eine Korngrenzphase, umfassend 1 bis 20 Gewichtsprozent in Oxidäquivalent einer Verbindung von zumindest einer Art eines Seltenerdelementes, ausgewählt aus Sm, Yb, Y, Er und Gd.

4. Sinterkörper auf Siliziumnitridbasis nach Anspruch 3, worin Korngrenzphase weiterhin von 0,1 bis 10 Gewichtsprozent eines Elementes in Oxidäquivalent aus zumindest einer Art umfasst, ausgewählt aus Mg, Ca und Ti.

5. Sinterkörper auf Siliziumnitridbasis nach einem der Ansprüche 1 bis 4, worin der Sinterkörper eine relative Dichte von 95% oder mehr hat und die $Si_3N_4$-Körner eine Durchschnittsgröße von 0,5 bis 20 μm haben.

6. Verfahren zur Erzeugung eines sehr wärmeleitfähigen Sinterkörpers auf Siliziumnitridbasis wie in Anspruch 1 definiert, umfassend:

   Mischen von Si-Pulvern, umfassend 0,1 Gewichtsprozent oder weniger Al, mit einem Sintermittel mit 1 bis 20 Gewichtsprozent der Si-Pulver in $Si_3N_4$-Äquivalent zur Bildung eines kompakten Materials, worin Oxidpulver von zumindest einer Art von Seltenerdmetallen, ausgewählt aus Sm, Yb, Y, Er, Gd, Eu, Tb und Tm als Sintermittel verwendet werden;

   Erwärmen des kompakten Materials bei einer Rate von 0,2 bis 0,6°C/min bei einer Temperatur im Bereich von 1220 bis 1320°C in einer Stickstoffatmosphäre, die 5% oder weniger He umfasst;

   Nitrieren des kompakten Materials bei einer Temperatur im Bereich von 1220 bis 1400°C; und

   Sintern des nitrierten kompakten Materials bei einer Temperatur im Bereich von 1650 bis 1950°C in einer Stickstoffatmosphäre.

7. Verfahren nach Anspruch 6, worin Oxidpulver, die von 0,1 bis 10 Gewichtsprozent der Si-Pulver in $Si_3N_4$-Äquivalent ausmachen, von zumindest einer Art eines Elementes, ausgewählt aus Mg, Ca und Ti weiterhin mit den Si-Pulvern und dem Sintermittel vermischt werden.

8. Verfahren nach Anspruch 7, worin das Sintern des nitrierten kompakten Materials bei einer Temperatur im Bereich von 1650 bis 1750°C in einer Stickstoffatmosphäre bei atmosphärischem Druck durchgeführt wird.

9. Verfahren nach einem der Ansprüche 6 bis 8, worin der Sinterkörper bei einer Rate von 100°C/h oder mehr im Bereich der Sintertemperatur bis 1600°C und bei einer Rate von 100°C/h oder weniger im Bereich von 1600 bis 1500°C gekühlt wird.

**Revendications**

1. Corps fritté à base de nitrure de silicium ($Si_3N_4$) ayant une conductibilité thermique élevée, dans lequel la moitié des largeurs des pics de diffraction de rayons X sur les plans (500) et (330) de $Si_3N_4$ sont de 0,2° ou moins, et dans lequel le corps fritté présente une conductibilité thermique de 80 W/mK ou plus et une résistance à la courbure en trois points de 800 MPa ou plus.

2. Corps fritté à base de nitrure de silicium tel que revendiqué dans la revendication 1, dans lequel les résultats mesurés des pics de diffraction de rayons X sur $Si_3N_4$ répondent à la formule suivante :

$$(W_5 - W_2) / (\tan \theta_5 - \tan \theta_2) \leq 0{,}001$$

dans laquelle $W_2$ est la moitié de la largeur du pic de diffraction sur le plan (200) à un angle mesuré $\theta = \theta_2$, et $W_5$ est la moitié de la largeur du pic de diffraction sur le plan (500) à un angle mesuré $\theta = \theta_5$.

3. Corps fritté à base de nitrure de silicium tel que revendiqué dans la revendication 1 ou la revendication 2, le corps fritté comprenant :

    une phase cristalline comprenant des grains de nitrure de silicium $\beta$; et
    une phase de joints de grains, comprenant 1 à 20 % en poids d'un composé, en équivalent d'oxyde, d'au moins une sorte d'élément de terre rare choisi parmi Sm, Yb, Y, Er, et Gd.

4. Corps fritté à base de nitrure de silicium tel que revendiqué dans la revendication 3, dans lequel la phase de joints de grains comprend en outre 0,1 à 10 % en poids d'un élément, en équivalent d'oxyde, d'au moins une sorte choisi parmi Mg, Ca et Ti.

5. Corps fritté à base de nitrure de silicium tel que revendiqué dans l'une quelconque des revendications 1 à 4, dans lequel le corps fritté présente une densité relative de 95 % ou plus, et les grains de $Si_3N_4$ ont une taille moyenne de 0,5 à 20 $\mu m$.

6. Procédé de fabrication d'un corps fritté à base de nitrure de silicium ayant une conductibilité thermique élevée tel que défini dans la revendication 1, le procédé comprenant les étapes suivantes :

    mélanger des poudres de Si contenant 0,1 % en poids ou moins de Al avec un agent de frittage représentant 1 à 20 % en poids des poudres de Si en équivalent $Si_3N_4$ pour former un produit compact, dans lequel on utilise comme agent de frittage des poudres d'oxydes d'au moins une sorte d'élément de terre rare choisi parmi Sm, Yb, Y, Er, Gd, Eu, Tb et Tm ;
    chauffer le produit compact à un taux de 0,2 à 0,6°C/min à une température dans la plage de 1220 à 1320°C dans une atmosphère d'azote contenant 5 % ou moins de He ;
    nitrurer le produit compact à une température dans la plage de 1220 à 1400°C ; et
    fritter le composé compact nitruré à une température dans la plage de 1650 à 1950°C dans une atmosphère d'azote.

7. Procédé tel que revendiqué dans la revendication 6, dans lequel on mélange en outre avec les poudres de Si et l'agent de frittage, des poudres d'oxydes, représentant 0,1 à 10 % en poids des poudres de Si en équivalent $Si_3N_4$, d'au moins une sorte d'élément choisi parmi Mg, Ca et Ti.

8. Procédé tel que revendiqué dans la revendication 7, dans lequel on effectue le frittage du produit compact nitruré à une température dans la plage de 1650 à 1750°C dans une atmosphère d'azote à pression atmosphérique,

9. Procédé tel que revendiqué dans l'une quelconque des revendications 6 à 8, dans lequel on refroidit le corps fritté à un taux de 100°C/h ou plus dans la plage de la température de frittage à 1600°C et à un taux de 100°C/h ou moins dans la plage de 1600 à 1500°C.